# EUROPEAN PATENT APPLICATION

(11) **EP 4 246 395 A1**
(43) Date of publication of application: **20.09.2023**
(21) Application number: 22162153.5
(22) Date of filing: 15.03.2022
(51) Int. Cl.: G06Q 10/06

(54) **METHOD FOR ESTIMATING AN ENVIRONMENTAL IMPACT CAUSED BY A TECHNICAL PROCESS**

(71) Applicant: Hitachi Energy Switzerland AG, 5400 Baden (CH)
(72) Inventor: JUL, Mercedes, 5400 Baden (CH); BAK, Monika Clara, 8046 Zürich (CH); SAERS, Robert, 722 46 Västerås (SE); WIKSTROM, Yannos, 87165 Härnösand (SE); LAINEZ AMAYA, Karla, 61243 Finspång (SE)
(74) Representative: Epping - Hermann - Fischer

(57) **Abstract**

According to an embodiment, the method for estimating an environmental impact caused by a technical process comprises a step of providing input information (Ii) which is representative for a predefined technical process (Pi), said predefined technical process comprising one or more predefined process steps (Sij). In a further step, reference information (Ir) is provided which is representative for different known process steps (Srj) and representative for the environmental impact caused by each known process step. In a further step, output information (Io) is determined depending on the input information and the reference information. The output information is representative for at least a portion of an estimated environmental impact caused by the predefined technical process

## Description

The present disclosure relates to a method for estimating an environmental impact caused by a technical process. Furthermore, the present disclosure relates to an apparatus, a computer program and a computer-readable data carrier configured to perform this method.

It is an object to provide an improved method for estimating an environmental impact caused by a technical process, e.g. a method which provides results quickly without the need for an elaborate lifecycle analysis. Further objects to be achieved are to provide an apparatus, a computer program and a computer-readable data carrier configured to perform this method.

Embodiments of the disclosure relate to an improved method for estimating an environmental impact caused by a technical process as well as an apparatus, a computer program and a computer-readable data carrier for performing this method.

Firstly, the method for estimating an environmental impact caused by a technical process is specified.

According to an embodiment, the method for estimating an environmental impact caused by a technical process comprises a step of providing input information which is representative for a predefined technical process, said predefined technical process comprising one or more predefined process steps. In a further step, reference information is provided which is representative for different known process steps and representative for the environmental impact caused by each known process step. In a further step, output information is determined depending on the input information and the reference information. The output information is representative for at least a portion of an estimated environmental impact caused by the predefined technical process.

The predefined technical process is, for example, a simplified description or representation of a real technical process, e.g. a computer-implemented description or representation of a real technical process. The predefined technical process may describe or represent, respectively, an actually performed technical process or a technical process which is planned to be actually performed. For example, the predefined technical process is a simplified work description for an engineering and/or installation and/or service task.

The predefined technical process may comprise several predefined process steps. At least one or all predefined process steps may be technical process steps. The input information may comprise a parameterization of the predefined process and/or of the assigned predefined process steps.

The predefined technical process may be the installation and/or maintenance of a technical device, like a power transformer or a wind turbine. Such a technical process comprises several process steps, like the production of the technical device, shipping of the technical device, traveling of the engineers and workers, use of consumables and/or gases and/or liquids during installation or maintenance etc. Each of these process steps causes an environmental impact, e.g. a carbon footprint. It is beneficial if one can estimate the environmental impact caused by the technical process when actually performed.

The method disclosed herein allows to quickly estimate the environmental impact caused by a predefined technical process because it uses information of known technical process steps, e.g. extracted from a database, like an LCA analysis database. It turns out that, based on this information, e.g. an LCA analysis database, a good estimation is obtained, e.g. by extrapolation or regression.

The input information is representative for the predefined technical process and, accordingly, for the one or more predefined process steps of the predefined technical process. For example, the input information is representative for parameters of the different predefined process steps and the chronical order of the predefined process steps. All of this information is extractable from the input information.

Providing the input information may comprise predefining the technical process. Predefining the technical process may comprise setting and/or determining parameters and/or the predefined process steps of the predefined technical process. Predefining may be done by a user using a computer and/or may be done automatically by the computer. The predefined technical process may describe a new technical process which has never been actually performed before.

The reference information is representative for known process steps and the associated environmental impact, i.e. the environmental impact caused by that known process step. This means that the reference information is representative for process steps which are understood or which already have been actually performed. For each of these known process steps, information about the environmental impact caused by that process step can be extracted from the reference information.

The reference information that is representative for the different known process steps may be representative for one or more formulas and/or one or more databases which, in turn, are representative for a known process step. A formula that is representative for a known process step may be configured such that, with the help of the formula, an impact value representative for the environmental impact caused by that process step can be determined. For this purpose, a parameter that is characteristic for the process step may have to be set in the formula in order to determine the impact value. One example for a process step being at least partially represented by a formula is the shipping of a technical device. The environmental impact is, e.g., dependent on the shipping distance. In order to determine the shipping distance, the haversine formula may be used.

A known process step may also be represented by a database. For example, in the database, a known process step is assigned at least one impact value, said at least one impact value being representative for the environmental impact caused by that known process step. An example of such a known process step being represented in a database may be the production and/or operation of a technical device, like a power transformer. There is a detailed LCA analysis database for different types of technical devices so that at least one impact value is known for each of these technical devices. If the predefined technical process comprises the predefined process step of producing a new technical device, for example, the detailed LCA analysis database for the known technical device can be used to estimate the impact value for the new technical device. For example, a scaling factor considering the weight of the known technical device and the weight of the new technical device is used to extrapolate the impact value for the known technical device to the impact value for the new technical device.

The determined output information is representative for at least a portion of the estimated environmental impact caused by the predefined technical process. For example, the output information is representative for the whole estimated environmental impact caused by the predefined technical process or only for the environmental impact caused by one or more predefined process steps of the predefined technical process. For example, the output information comprises an impact value for the whole predefined technical process, said impact value being representative for the estimated environmental impact caused by the whole predefined technical process. Additionally or alternatively, the output information may comprise an individual impact value for one or more or each predefined process step of the predefined technical process, wherein an impact value of a predefined process step is representative for the estimated environmental impact caused exclusively by that predefined process step.

Herein, information is, for example, electronic information, like computer data.

According to a further embodiment, determining the output information comprises the selection of at least one known process step depending on the input information and on the reference information, wherein the at least one selected known process step corresponds to at least one predefined process step of the predefined technical process. "Corresponds" herein means that the predefined process step of the predefined technical process and the known process step are comparable or similar. For example, the production of a known technical device and the production of a new technical device having, e.g., a different weight and/or being configured for a different power, are similar process steps and therefore correspond to each other.

There may be several known process steps saved in the reference information which each correspond to the same predefined process step of the predefined technical process. For example, the reference information may comprise information about the production of several, different known technical devices. All these known process steps may then be selected as they correspond to the predefined process step of the predefined technical process.

According to a further embodiment, the output information is determined depending on the at least one selected known process step and the associated environmental impact, i.e. the environmental impact caused by the at least one selected known process step. For example, the impact value of a predefined process step of the predefined technical process is determined by extrapolation or regression of the one or more impact values of the selected and corresponding known process step(s).

According to a further embodiment, at least one predefined process step of the predefined technical process is assigned at least one input parameter that is characteristic for the respective predefined process step. For example, the input parameter is the weight of a new technical device, like a new transformer. The input parameter is extractable from the input information.

According to a further embodiment, at least one selected known process step corresponding to the predefined process step is assigned at least one reference parameter that is characteristic for that selected known process step. The reference parameter is extractable from the reference information. For example, the reference parameter is the weight of a known technical device, like a known transformer.

According to a further embodiment, determining the output information comprises an extrapolation or regression based on the at least one reference parameter and the at least one input parameter. For example, the impact value for the predefined process step of the predefined technical process is determined to be the impact value of the at least one selected and corresponding process step multiplied by a scaling factor, wherein the scaling factor is dependent on the at least one input parameter and the at least one reference parameter. For example, the impact value for the production of a new technical device is calculated by weighting the impact value for the production of a known technical device by the ratio between the weights of the new technical device and the known technical device.

According to a further embodiment, providing the reference information comprises providing an LCA analysis database. The LCA analysis database may, e.g., comprise detailed information about the environmental impact caused by certain known process steps, like the production and/or operation of a technical device. For example, an impact value assigned to at least one known process step is extractable from the LCA analysis database.

According to a further embodiment, the predefined technical process is set up or predefined, respectively, by choosing at least one process step and/or at least one assigned input parameter. For example, the method comprises the query of desired process steps and/or assigned input parameters. A user may have to set the desired process steps and/or the assigned input parameters into a computer program. These set process steps and/or parameters are then stored in the input information. The set process steps then constitute the predefined process steps.

According to a further embodiment, the method further comprises analyzing the output information. For example, determined environmental impacts of the whole predefined process and/or of the individual predefined process steps are analyzed in order to optimize the predefined technical process, e.g. in order to minimize the estimated environmental impact. For example, an individual impact value of each predefined process step of the predefined technical process is determined/calculated. Each of the individual impact values may be analyzed in order to optimize the impact value of the whole predefined technical process.

According to a further embodiment, the predefined technical process is set up depending on an optimization process optimizing the estimated environmental impact caused by the predefined technical process. The optimization process uses the output information. The optimization process is, e.g. an iterative process. The optimization process may be an automatic process. For example, the input parameters and/or the predefined process steps of the predefined technical process are varied. In each case at least one impact value of the predefined technical process may be determined. Then, an extreme impact value may be searched for in the amount of determined impact values, said extreme impact value is representative for a minimum environmental impact.

The predefined technical process with the minimum estimated environmental impact may then be suggested to a client and/or may be actually executed.

According to a further embodiment, the environmental impact is or comprises a carbon footprint.

According to a further embodiment, the at least one predefined process step of the predefined technical process is at least one of: production of a technical device, shipping of a technical device, installation of a technical device, operation of a technical device, maintenance of a technical device, traveling for installation and/or maintenance of a technical device, use of consumables and/or liquids and/or gases during installation and/or maintenance of a technical device. The known technical process steps may be corresponding steps, like the production of a known technical device, shipping of a known technical device, installation of a known technical device, operation of a known technical device, maintenance of a known technical device, traveling for installation and/or maintenance of a known technical device, use of consumables and/or liquids and/or gases during installation and/or maintenance of a known technical device.

Each process step may comprise one or more sub-process steps. For example, shipping may comprise several sub-process steps, like shipping a certain distance by truck, a certain distance by train and/or a certain distance by ship. Everything that is disclosed in connection with the process steps is also disclosed in connection with the sub-process steps.

According to a further embodiment, the at least one input parameter is representative for at least one of: a traveling means, a traveling distance, a number of travelers, a number of stays in accommodation, a shipping means, a shipping distance, a weight and/or size of a technical device, a weight of materials, a type of materials (e.g. type of gas and/or liquids used for installation and/or maintenance of a technical device), a product category of a technical device (e.g. high voltage or low voltage transformer or oil transformer or dry transformer), voltage level of a technical device, current level of a technical device, rated power of a technical device, a man-days or a time (e.g. for installation and/or maintenance). The at least one input parameter may be representative for several of the mentioned features. The reference parameters of the known process steps may be representative for corresponding information.

According to a further embodiment, the method is a computer-implemented method. Particularly, all method steps disclosed herein may be performed by a computer or with the help of computer.

Next, the apparatus, the computer program and the computer-readable data carrier are specified.

According to an embodiment, the apparatus comprises a processor configured to perform the method according to any one of the embodiments disclosed herein. For example, the apparatus is a computer.

According to an embodiment, the computer program comprises instructions which, when the program is executed by a computer, cause the computer to carry out the method according to any one of the embodiments disclosed herein.

According to an embodiment, the computer-readable data carrier comprises instructions which, when executed by a computer, cause the computer to carry out the method according to any one of the embodiments disclosed herein.

Hereinafter, the method for estimating an environmental impact caused by a technical process will be explained in more detail with reference to drawings on the basis of exemplary embodiments. The accompanying figures are included to provide a further understanding. In the figures, elements of the same structure and/or functionality may be referenced by the same reference signs. In so far as elements or components correspond to one another in terms of their function in different figures, the description thereof is not repeated for each of the following figures. For the sake of clarity, elements might not appear with corresponding reference symbols in all figures.

In the figures:

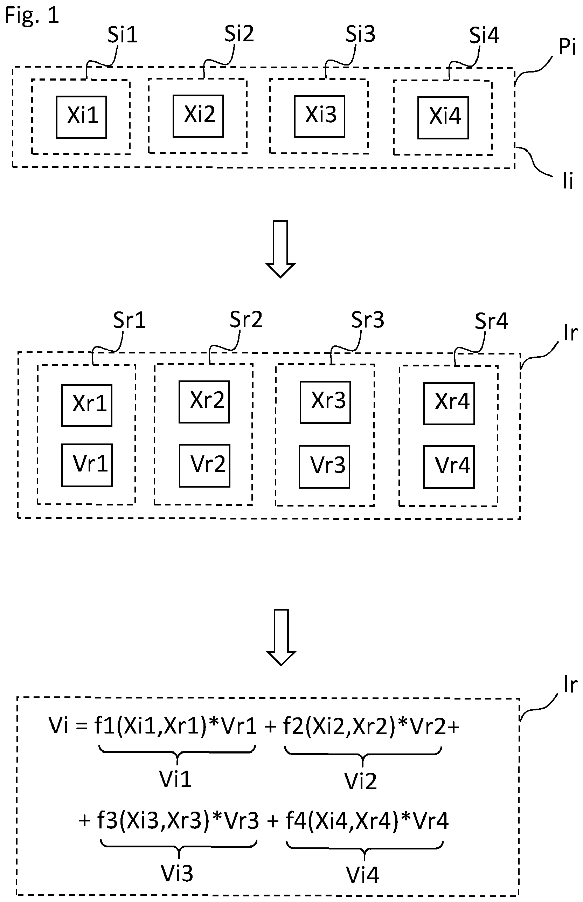

Figures 1 to 3 show flowcharts of different exemplary embodiments of the method for estimating an environmental impact caused by a technical process.

Figure 1 shows a first exemplary embodiment of the method. Input information Ii is provided. The input information Ii is representative for a predefined technical process Pi. For example, the predefined technical process Pi is set up by answering a query presented by a computer. The predefined technical process Pi is, e.g., a simplified work description for an engineering and/or service task.

The predefined technical Pi process comprises several predefined process steps Si1, Si2, Si3, Si4. In the following, the method is described on the basis of one specific example for which the predefined technical process Pi is the production of a new oil transformer at a production location and the installation of the new oil transformer at an installation location. The process step Si1 is the production of the new transformer, process step Si2 is the shipping of the new transformer from the production location to the installation location, process step Si3 is the traveling of the engineers and/or workers to the installation location and their stay at the installation location. Process step Si4 is the installation of the new transformer at the installation location.

Each of the process steps Si1, Si2, Si3, Si4 is assigned at least one input parameter Xi1, Xi2, Xi3, Xi4. The input parameter(s) Xij assigned to a process step Sij is characteristic for the process step Sij. The input parameter Xij may be representative for one or more features of the assigned process step Sij, thus it may be a scalar or an n-tuple.

For example, process step Si1 is assigned an input parameter Xi1 which is representative for the weight of the new transformer, the voltage level of the new transformer, the current level of the new transformer, the power rating of the new transformer and/or the category of the new transformer (high voltage or medium voltage) and, where appropriate, the subcategory of the new transformer (dry transformer or oil transformer).

Process step Si2 is assigned an input parameter Xi2 which is representative for the weight of the new transformer, the production location of the new transformer, the installation location of the new transformer and the one or more shipping means for the new transformer.

Process step Si3 is representative for the one or more traveling means, the traveling distance, the number of travelers/workers and the number of hotel stays during the traveling and during the stay at the installation location.

Process step Si4 is assigned an input parameter which is, e.g., representative for the type of consumables used per man-day/hour during installation, the number of man-days/hours for the installation, the type of liquid used during the installation and/or the type of gas used during the installation.

In a further step, reference information Ir is provided. The reference information Ir can be provided before, after or simultaneously with the provision of the input information Ii. The reference information Ir is representative for known process steps Sr1, Sr2, Sr3, Sr4.

For example, process step Sr1 is the production of a known oil transformer, process step Sr2 is the shipping of the known transformer from a production location of the known transformer to an installation location of the known transformer, process Sr3 is the traveling of engineers and workers to the installation location of the known transformer and process step Sr4 is the installation of the known transformer at the installation location.

Each of the known process steps Sr1, Sr2, Sr3, Sr4 is assigned at least one reference parameter Xr1, Xr2, Xr3, Xr4. The reference parameters Xr1, Xr2, Xr3, Xr4 are of the same type as the above-mentioned parameters Xi1, Xi2, Xi3, Xi4. Moreover, each of the known process steps Srj is assigned an impact value Vr1, Vr2, Vr3, Vr4. The impact value Vrj is representative for the environmental impact of the assigned process step Srj, e.g. for the carbon footprint of the assigned process step Srj. The impact values Vr1, Vr2, Vr3, Vr4 may be subdivided into impact values for each sub-process step of the known process step Srj. Hence, the impact value Vrj may be a scalar or an n-tuple. For each known process step Srj, the assigned impact value Vrj can be extracted from the reference information Ir.

The impact value Vr1 and the assigned known process step Sr1 are, e.g., stored in an LCA analysis database of the known transformer, this LCA analysis database is part of the reference information Ir. Thus, a detailed LCA analysis of the environmental impact of the production of the known transformer is used here.

The impact value Vr2 may be at least partially extractable from a database.

The impact value Vr3 may be a standard value categorized depending on the traveling means.

The impact value Vr4 may be at least partially extractable from a database, which is for example based on a previous project. For example, a standard amount of consumables per man-day/hour stored in this database can be extracted from the reference information Ir. Another part of the impact value Vr4 concerning gases and liquids used during installation or maintenance may be extractable from standard values of embodied carbon per material and standard leakage rates for assets.

In a next step, output information is determined which is representative for the estimated environment impact, e.g. the estimated carbon footprint, of the predefined technical process Pi. In this case, an impact value Vi is calculated depending on the input information Ii and the reference information Ir. The impact value Vi is thereby representative for the estimated environmental impact (carbon footprint) of the whole predefined technical process Pi.

For this purpose, for each of the predefined process steps Sij of the predefined technical process Pi, an impact value Vi1, Vi2, Vi3, Vi4 that is representative for estimated environmental impact caused by the respective process step Si1, Si2, Si3, Si4 is calculated and these impact values Vi1, Vi2, Vi3, Vi4 are then summed up to the impact value Vi that is representative for the whole environmental impact of the predefined technical process Pi.

Using the above example, the impact value Vi1 of the predefined process step Si1 concerning the production of the new transformer is determined based on scaling the impact value Vr1. For example, the scaling factor f1 is dependent on the input parameter Xi1 and the reference parameter Xr1. As a very simplified example, in the case that the new transformer is twice as heavy and configured for twice the power as the known transformer, the scaling factor f1 is 2.

The impact value Vi2 is, e.g. calculated using the haversine formula, taking into account latitude and longitude database of the production and installation location. With this formula, a theoretical distance/track is calculated, for example. Different factors may then be considered and, e.g., multiplied with the theoretical distance. These factors may take into account that freight is not exactly going the theoretically calculated distance/track but, e.g., there may be a split between different shipping means, a plane or ship may not take the most direct route, there may be rerouting and/or stops in between and so on. For example, assuming that the impact value Vr2 for the shipping of a known transformer having a certain weight and having been shipped by a certain distance, the impact value Vi2 can again be calculated based on scaling the reference value Vr2 by a scaling factor f2 which is dependent on the input parameter Xi2 comprising information about the weight and the shipping distance of the new transformer and dependent on the reference parameter X2r comprising information about the weight and the shipping distance of the known transformer.

In a similar way, scaling factors f3 and f4 are used for calculating the impact values Vi3, Vi4 for the predefined process steps Si3, Si4 of the predefined technical process Pi.

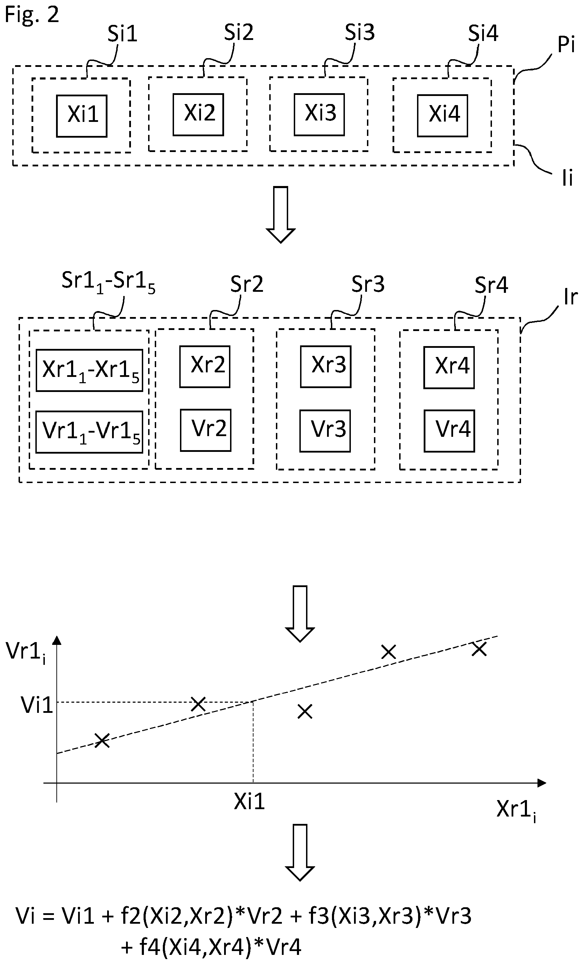

Figure 2 shows a second exemplary embodiment of the method. The difference to the first exemplary embodiment is that, for the predefined process step Si1, corresponding known process steps Si1₁ to Si1₅ concerning the production of five different known transformers are stored in the LCA database.

In order to calculate the impact value Vi1 for the predefined process step Si1 of the predefined technical process Pi, a regression is performed by fitting the data points (Xrlj,Vilj) for the different known process steps Silj with a straight line (this is a simplified example) and then using the straight line in order to determine the impact value Vi1 for the input parameter Xi1 (see graph in figure 2).

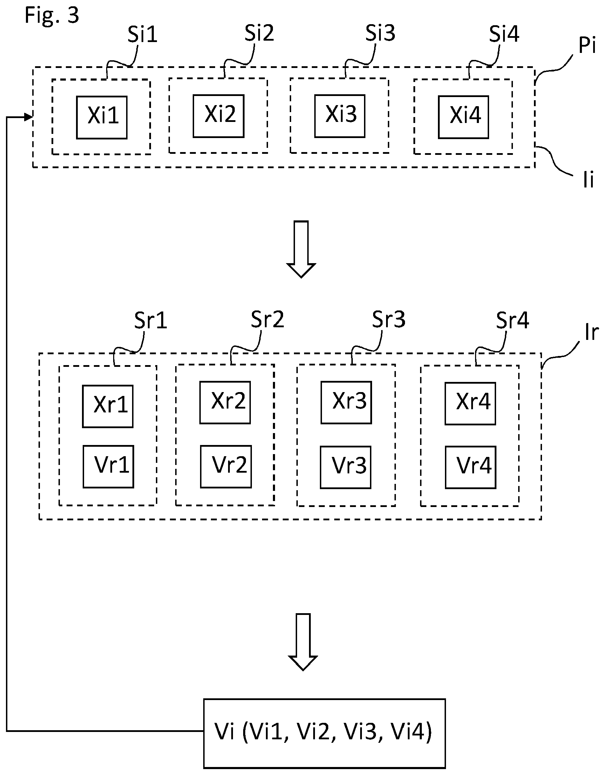

Figure 3 shows a third exemplary embodiment. In this exemplary embodiment, the impact value Vi of the whole predefined technical process Pi and/or impact values Vi1, Vi2, Vi3, Vi4 of the individual predefined process steps Si1, Si2, Si3, Si4 are analyzed. For example, the impact values are analyzed in order to optimize the predefined technical process Pi in terms of a minimum estimated environmental impact (e.g. minimum estimated carbon footprint). For example, an optimization process is performed by varying the input parameters Xi1, Xi2, Xi3, Xi4 in small steps in order to find an extreme value of the impact value Vi of the whole technical process Pi. If this extreme impact value Vi represents a minimum environmental impact, the corresponding predefined technical process Pi is set to be a technical process which is, for example, actually performed later on.

The embodiments shown in the Figures 1 to 3 as stated represent exemplary embodiments of the improved method for estimating an environmental impact caused by a technical process; therefore, they do not constitute a complete list of all embodiments according to the improved method. Actual method steps may vary from the embodiments shown in terms of calculations, for example.

### Reference Signs

- Ii: input information
- Ir: reference information
- Io: output information
- Pi: predefined technical process
- Sij: predefined process step
- Srj: known process step
- Vij: impact value of the predefined process step Sij
- Vrj: impact value of the known process step Srj
- Vi: impact value of technical process Pi
- fj: scaling factor

## Claims

1. Method for estimating an environmental impact caused by a technical process comprising:
- providing input information (Ii) which is representative for a predefined technical process (Pi) comprising one or more predefined process steps (Sij);
- providing reference information (Ir) being representative for different known process steps (Srj) and the environmental impact caused by each known process step (Srj);
- determining output information (Io) depending on the input information (Ii) and the reference information (Ir), wherein
- the output information (Io) is representative for at least a portion of an estimated environmental impact caused by the predefined technical process (Pi).

2. Method according to claim 1, wherein
- determining the output information (Io) comprises:
- selecting at least one known process step (Srj) depending on the input information (Ii) and the reference information (Ir), wherein the at least one selected known process step (Srj) corresponds to at least one predefined process step (Sij) of the predefined technical process (Pi),
- the output information (Io) is determined depending on the at least one selected known process step (Srj) and the associated environmental impact.

3. Method according to claim 2, wherein
- at least one predefined process step (Sij) of the predefined technical process (Pi) is assigned at least one input parameter (Xi) being characteristic for the respective predefined process step (Si), wherein the at least one input parameter (Xij) is extractable from the input information (Ii),
- at least one selected known process step (Srj) corresponding to the predefined process step (Sij) is assigned at least one reference parameter (Xrj) being characteristic for that selected known process step (Srj), wherein the reference parameter (Xrj) is extractable from the reference information (Ir),
- determining the output information (Io) comprises an extrapolation or regression based on the at least one reference parameter (Xrj) and the at least one input parameter (Xi).

4. Method according to any of the preceding claims, wherein
- providing the reference information (Ir) comprises providing an LCA analysis database.

5. Method according to any one of the preceding claims, wherein
- the predefined technical process (Pi) is set up by choosing at least one process step (Sij) and/or at least one assigned input parameter (Xij).

6. Method according to any one of the preceding claims, further comprising
- analyzing the output information (Io) in order to optimize the predefined technical process (Pi).

7. Method according to any one of the preceding claims, wherein
- the predefined technical process (Pi) is set up depending on an optimization process optimizing the estimated environmental impact caused by the predefined technical process (Pi) and using the output information (Io).

8. Method according to any one of the preceding claims, wherein
- the environmental impact is a carbon footprint.

9. Method according to any one of the preceding claims, wherein
- the at least one predefined process step (Sij) of the predefined technical process (Pi) is at least one of: production of a technical device, shipping of a technical device, installation of a technical device, operation of a technical device, maintenance of a technical device, traveling for installation or maintenance of a technical device.

10. Method according to claim 3 or any of claims 4 to 9 in its dependency on claim 3, wherein the at least one input parameter (Xij) is representative for at least one of:
- a traveling means, a traveling distance, a number of travelers, a number of stays in an accommodation,
- a shipping means, a shipping distance, a weight and/or size of a technical device, a weight of materials, a type of material,
- a product category of a technical device, a voltage level of a technical device, a current level of a technical device, a rated power of a technical device,
- man-days, a time.

11. Method according to any one of the preceding claims, wherein
- the method is a computer-implemented method.

12. Apparatus comprising a processor configured to perform the method according to any one of claims 1 to 11.

13. Computer program comprising instructions which, when the program is executed by a computer, cause the computer to carry out the method according to any one of claims 1 to 11.

14. Computer-readable data carrier comprising instructions which, when executed by a computer, cause the computer to carry out the method according to any one of claims 1 to 11.
